# NOUVEAU FASCICULE DE BREVET EUROPEEN

(11) **EP 2 841 613 B2**
(45) Date de publication et mention de la décision concernant l'opposition: **20.11.2024**
(45) Mention de la délivrance du brevet: 19.12.2018
(21) Numéro de dépôt: 13727379.3
(22) Date de dépôt: 25.04.2013
(51) Int. Cl.: C23C 2/06, C23C 2/26, C23C 22/06

(54) **PROCÉDÉS DE RÉALISATION D'UNE TÔLE PRÉLAQUÉE À REVÊTEMENTS ZnAlMg ET TÔLE CORRESPONDANTE**
HERSTELLUNG EINES ZNALMG- VORBESCHICHTETEN BLECH UND ENTSPRECHENDES BLECH
METHOD FOR MANUFACTURING A ZNALMG PRECOATED SHEET AND CORRESPONDING SHEET

(30) Priorité: 25.04.2012 WO PCT/FR2012/050910
(43) Date de publication de la demande: 04.03.2015
(73) Titulaire: ArcelorMittal, 1160 Luxembourg (LU)
(72) Inventeur: MACHADO AMORIM, Tiago, F-57070 Metz (FR); RICHARD, Joëlle, F-60500 Chantilly (FR); JACQUESON, Eric, F-57050 Longeville les Metz (FR); LHERMEROULT, Audrey, F-57000 Metz (FR); FELTIN, Pascale, F-57850 Saint Privat la Montagne (FR); LEMAIRE, Jean-Michel, F-60870 Villers Saint Paul (FR); ALLELY, Christian, F-57000 Metz (FR); DIEZ, Luc, F-57070 Metz (FR); MATAIGNE, Jean-Michel, F-60300 Senlis (FR)
(74) Mandataire: Lavoix
(86) Numéro de dépôt international: PCT/IB2013/053279
(87) Numéro de publication internationale: WO 2013/160866

(56) Documents cités:
- EP-A1- 1 199 376
- EP-A1- 1 199 376
- EP-A1- 1 466 994
- EP-A1- 1 466 994
- WO-A1-01/71058
- WO-A2-02/18065
- WO-A2-2008/135478
- JP-A- 2007 131 906
- JP-A- 2007 131 906
- US-A1- 2011 008 644
- US-A1- 2011 008 644
- US-A1- 2011 008 644
- ANONYMOUS: "Schmelztauchveredeltes Band und Blech", STAHL, 2010, pages 1 - 30
- ANONYMOUS: "Sicherheitsdatenblatt gemäb (EB) Nr.1907/2006 - ISO 11014-1", HENKEL 1456, 17 July 2008 (2008-07-17), pages 1 - 6
- GERHARD NEBA: "Stahlband und seine Oberflächenveredelung", TIS-GDV.DE, 2000, pages 1 - 9, Retrieved from the Internet <URL:http://www.tis-gdv.de/tis/tagungen/svt/svt00/nebal/nebal.htm>

## Description

La présente invention est relative à une tôle comprenant un substrat en acier présentant deux faces revêtues chacune par un revêtement métallique comprenant du zinc, du magnésium et de l'aluminium et par un film de peinture.

De telles tôles sont communément désignées comme étant « prélaquées » et elles sont par exemple destinées au domaine électroménager ou à la construction.

L'ensemble du procédé de réalisation de telles tôles étant assuré par le sidérurgiste, les coûts et les contraintes liés à la mise en peinture chez les utilisateurs sont diminués.

Les revêtements métalliques comprenant essentiellement du zinc et de l'aluminium en faible proportion (typiquement de l'ordre de 0,1% en poids) sont traditionnellement utilisés pour leur bonne protection contre la corrosion. Ces revêtements métalliques sont à présent concurrencés notamment par les revêtements comprenant du zinc, du magnésium et de l'aluminium.

De tels revêtements métalliques seront globalement désignés ici sous le terme de revêtements zinc- aluminium- magnésium ou ZnAlMg.

L'ajout de magnésium augmente nettement la résistance à la corrosion de ces revêtements, ce qui peut permettre de réduire leur épaisseur ou d'augmenter la garantie de protection contre la corrosion dans le temps.

Les demandes EP 1 466 994 et EP 1 199 376 décrivent une tôle d'acier munie d'un revêtement ZnAlMg obtenu au trempé. La demande US 2011/0008644 décrit un procédé de préparation d'un corps lié d'une tôle en acier galvanisé et d'un adhésif comprenant notamment les étapes de traitement de surface puis revêtement par un adhésif thermodurcissable. La demande JP 2007/131906 décrit un procédé de préparation de tôles revêtues par un revêtement ZnAlMg et vernies comprenant les étapes consistant à fournir des tôles d'acier revêtues au trempé par un revêtement ZnAlMg, les soumettre à un polissage, oxyder la surface par immersion dans une solution alcaline, éventuellement immerger dans une solution d'acide sulfurique contenant des ions de Co et/ou Ni, éventuellement chromatation, puis application d'un vernis.

Un but de l'invention est de proposer un procédé qui permette de réaliser des tôles prélaquées à revêtements ZnAlMg, ces tôles ayant une résistance à la corrosion encore accrue.

A cet effet, l'invention a pour premier objet un procédé selon les revendications 1, 5 et 7.

Le procédé peut également comprendre les caractéristiques des revendications 2 à 4, 6 et 8 à 13, prises isolément ou en combinaison.

La demande décrit une tôle présentant deux faces 5 revêtues chacune par un revêtement métallique 7 comprenant du zinc, de l'aluminium et du magnésium et par un film de peinture 9,11, les revêtements métalliques 7 comprenant entre 0,1 et 20% en poids d'aluminium et entre 0,1 et 10% en poids de magnésium, la tôle étant susceptible d'être réalisée par le procédé selon l'invention.

L'invention va à présent être illustrée par des exemples donnés à titre indicatif, et non limitatif, et en référence aux figures annexées sur lesquelles :
- la figure 1 est une vue schématique en coupe illustrant la structure d'une tôle obtenue par un procédé selon l'invention, et
- les figures 2 et 3 montrent des résultats d'analyse par spectroscopie XPS des surfaces extérieures des revêtements métalliques.

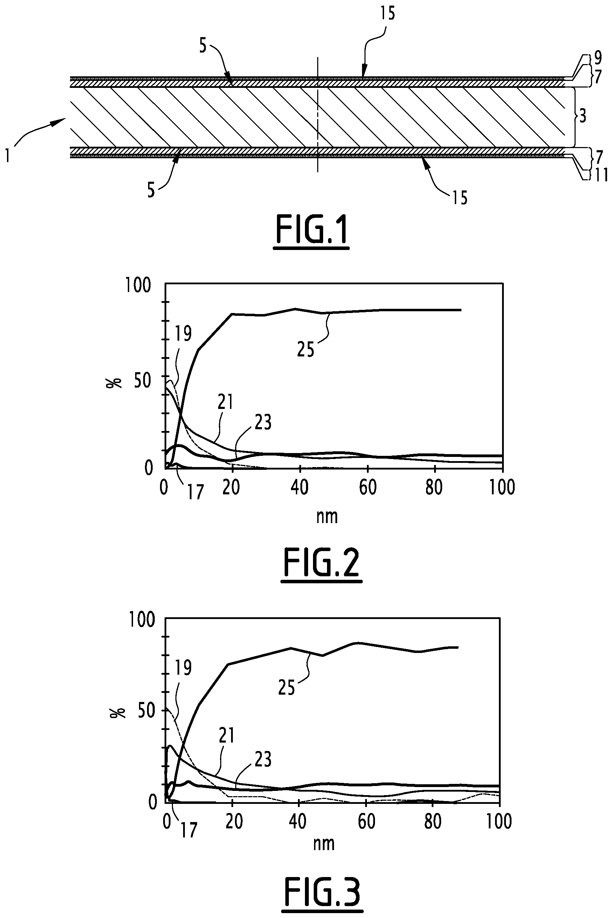

La tôle 1 de la figure 1 comprend un substrat 3 en acier recouvert sur chacune de ses deux faces 5 par un revêtement métallique 7. Les revêtements 7 sont recouverts respectivement d'un film supérieur de peinture 9 et d'un film inférieur de peinture 11.

On observera que les épaisseurs relatives du substrat 3 et des différentes couches le recouvrant n'ont pas été respectées sur la figure 1 afin de faciliter la représentation.

Les revêtements 7 présents sur les deux faces 5 sont analogues et un seul sera décrit en détail par la suite.

Le revêtement 7 présente généralement une épaisseur inférieure ou égale à 25 µm et vise de manière classique à protéger le substrat 3 contre la corrosion.

Le revêtement 7 comprend du zinc, de l'aluminium et du magnésium. On préfère en particulier que le revêtement 7 comprenne entre 0,1 et 10% en poids de magnésium et entre 0,1 et 20% en poids d'aluminium.

De préférence encore, le revêtement 7 comprend plus de 0,3% en poids de magnésium voire entre 0,3% et 4% en poids de magnésium et/ou entre 0,5 et 11% voire entre 0,7 et 6% en poids d'aluminium.

De préférence, le rapport massique Mg/Al entre le magnésium et l'aluminium dans le revêtement 7 est inférieur ou égal à 1, voire strictement inférieur à 1, voire strictement inférieur à 0,9.

Les films de peinture 9 et 11 sont par exemple à base de polymères. De préférence, ils comprennent au moins un polymère choisi dans le groupe constitué des polyesters à réticulation mélamine, des polyesters à réticulation isocyanate, des polyuréthanes et des dérivés halogénés de polymères vinyliques, à l'exclusion des peintures cataphorétiques

Les films 9 et 11 ont typiquement des épaisseurs comprises entre 1 et 200 µm.

Pour réaliser la tôle 1, on peut par exemple procéder comme suit.

L'installation utilisée peut comprendre une seule et même ligne ou par exemple deux lignes différentes pour réaliser respectivement les revêtements métalliques et la mise en peinture. Dans le cas où deux lignes différentes sont utilisées, elles peuvent être situées sur le même site ou sur des sites distincts. Dans la suite de la description, on considéra à titre d'exemple une variante où deux lignes distinctes sont utilisées.

Dans une première ligne de réalisation des revêtements métalliques 7, on utilise un substrat 3 obtenu par exemple par laminage à chaud puis à froid. Le substrat 3 est sous forme d'une bande que l'on fait défiler dans un bain pour déposer les revêtements 7 par trempé à chaud.

Le bain est un bain de zinc fondu contenant du magnésium et de l'aluminium. Le bain peut également contenir jusqu'à 0,3% en poids de chacun des éléments optionnels d'addition tels que Si, Sb, Pb, Ti, Ca, Mn, Sn, La, Ce, Cr, Ni, Zr ou Bi.

Ces différents éléments peuvent permettre, entre autres, d'améliorer la ductilité ou l'adhésion des revêtements 7 sur le substrat 3. L'homme du métier qui connaît leurs effets sur les caractéristiques des revêtements 7 saura les employer en fonction du but complémentaire recherché. Le bain peut enfin contenir des éléments résiduels provenant des lingots d'alimentation ou résultant du passage du substrat 3 dans le bain, tels que du fer à une teneur allant jusqu'à 5% en poids et généralement comprise entre 2 et 4% en poids.

Après dépôt des revêtements 7, le substrat 3 est par exemple essoré au moyen de buses projetant un gaz de part et d'autre du substrat 3.

On laisse ensuite refroidir les revêtements 7 de façon contrôlée.

La bande ainsi traitée peut ensuite être soumise à une étape dite de skin-pass qui permet de l'écrouir de sorte à effacer le palier d'élasticité, à fixer les caractéristiques mécaniques et à lui conférer une rugosité adaptée aux opérations d'emboutissage et à la qualité de surface peinte que l'on souhaite obtenir. Le moyen de réglage de l'opération de skin-pass est le taux d'allongement qui doit être suffisant pour atteindre les objectifs et minimum pour conserver la capacité de déformation ultérieure. Le taux d'allongement est habituellement compris entre 0,3 à 3%, et préférence entre 0,3 et 2,2%..

La bande peut éventuellement être bobinée avant d'être envoyée vers une ligne de prélaquage.

Les surfaces extérieures 15 des revêtements 7 y sont soumises à des étapes de :
- dégraissage, par exemple par application d'une solution alcaline, puis
- rinçage et séchage, puis
- traitement de surface pour augmenter l'adhérence de la peinture et la résistance à la corrosion, puis
- rinçage et éventuellement séchage, puis
- mise en peinture.

L'étape de dégraissage a pour but de nettoyer les surfaces extérieures 15 et donc d'enlever les traces de salissure organique, de particules métalliques et de poussière.

De préférence, cette étape ne modifie pas la nature chimique des surfaces extérieures 15 à l'exception de l'altération d'une éventuelle couche d'oxyde/hydroxyde d'aluminium de surface. Ainsi, la solution employée pour cette étape de dégraissage est non-oxydante. On ne forme donc pas d'oxyde de magnésium ou d'hydroxyde de magnésium sur les surfaces extérieures 15 lors de l'étape de dégraissage et plus généralement avant l'étape de mise en peinture.

L'étape de traitement de surface comprend l'application sur les surfaces extérieures 15 d'une solution de conversion qui réagit chimiquement avec les surfaces extérieures 15 et permet ainsi de former sur les surfaces extérieures 15 des couches de conversion (non-représentées). De préférence, la solution de conversion ne contient pas de chrome. Il peut ainsi s'agir d'une solution à base d'acide hexafluorotitanique ou hexafluorozirconique.

La mise en peinture peut être réalisée par exemple par dépôt de deux couches de peintures successives, à savoir une couche de primaire et une couche de finition ce qui est généralement le cas pour réaliser le film supérieur 9, ou par dépôt d'une couche de peinture unique, ce qui est généralement le cas pour réaliser le film inférieur 11. D'autres nombres de couches peuvent être utilisés dans certaines variantes.

Le dépôt des couches de peinture est assuré par exemple par des vernisseuses à rouleaux.

Chaque dépôt d'une couche de peinture est généralement suivi d'une cuisson dans un four.

La tôle 1 ainsi obtenue peut à nouveau être bobinée avant d'être découpée, éventuellement mise en forme et assemblée avec d'autres tôles 1 ou d'autres éléments par des utilisateurs.

Les inventeurs ont montré que l'utilisation d'une étape d'altération d'une couche d'oxyde de magnésium ou d'hydroxyde de magnésium présente à la surface extérieure 15 de chaque revêtement 7 permet d'améliorer la résistance à la corrosion de la tôle 1, et notamment de limiter le phénomène de cloquage des films de peinture 9 et 11 lorsque la tôle 1 est soumise à un environnement corrosif.

On entend ici par couche d'oxyde de magnésium ou d'hydroxyde de magnésium, une couche pouvant contenir des composés de type MgₓO_{y}, ou des composés de type Mgₓ(OH)_{y}, ou encore un mélange de ces deux types de composés.

En effet, des analyses par spectroscopie XPS (X ray Photoemission Spectroscopy) des surfaces extérieures 15 des revêtements 7 ont fait apparaître la présence prépondérante d'oxyde de magnésium ou d'hydroxyde de magnésium avant la mise en peinture, même lorsque les revêtements 7 ont des teneurs en aluminium et en magnésium similaires.

Pourtant, dans les revêtements habituels comprenant essentiellement du zinc et de l'aluminium en faible proportion, les surfaces extérieures des revêtements métalliques sont recouvertes d'une couche d'oxyde d'aluminium, malgré la teneur en aluminium très faible. Pour des teneurs similaires en magnésium et en aluminium, on se serait donc attendu à trouver de manière prépondérante de l'oxyde d'aluminium.

La spectroscopie XPS a aussi été employée pour mesurer l'épaisseur des couches d'oxyde de magnésium ou d'hydroxyde de magnésium présentes sur les surfaces extérieures 15 avant leur mise en peinture. Il apparaît que ces couches ont une épaisseur de quelques nm.

On notera que ces analyses par spectroscopie XPS ont été effectuées sur des échantillons de tôles 1 qui n'avaient pas été soumis à des environnements corrosifs. La formation des couches d'oxyde de magnésium ou d'hydroxyde de magnésium est donc liée au dépôt des revêtements 7.

Les figures 2 et 3 illustrent respectivement les spectres des éléments pour les niveaux d'énergie C1s (courbe 17), O1s (courbe 19), Mg1s (courbe 21), Al2p (courbe 23) et Zn2p3 (courbe 25) lors d'une l'analyse par spectroscopie XPS. Les pourcentages atomiques correspondants sont portés en ordonnée et la profondeur d'analyse en abscisse.

L'échantillon analysé sur la figure 2 correspond à des revêtements 7 comprenant 3,7% en poids d'aluminium et 3% en poids de magnésium et soumis à une étape classique de skin-pass avec un allongement de 0,5% tandis que l'échantillon de la figure 3 n'a pas été soumis à une telle étape.

Sur ces deux échantillons, on peut estimer d'après les analyses par spectroscopie XPS que l'épaisseur des couches d'oxyde de magnésium ou d'hydroxyde de magnésium est d'environ 5 nm.

Il apparaît ainsi que ces couches d'oxyde de magnésium ou d'hydroxyde de magnésium ne sont pas retirées par les étapes de skin-pass classiques, ni d'ailleurs par les dégraissages alcalins classiques et les traitements de surface classiques.

Selon l'invention, le procédé de réalisation de la tôle 1 comprend, avant la mise en peinture, une étape d'altération de couches d'oxyde de magnésium ou d'hydroxyde de magnésium présentes sur les surfaces extérieures 15 des revêtements 7.

Une telle étape d'altération peut intervenir avant ou pendant l'étape de traitement de surface. Elle peut intervenir par exemple sur la ligne de réalisation des revêtements 7 ou sur la ligne de prélaquage.

Dans un premier mode de réalisation, l'étape d'altération comprend l'application d'une solution acide, par exemple avec un pH compris entre 1 et 4, de préférence entre 1 et 3,5 et de préférence encore entre 1 et 3, sur les surfaces extérieures 15. Cette solution peut comprendre par exemple de l'acide chlorhydrique, de l'acide sulfurique ou de l'acide phosphorique.

La durée d'application de la solution acide peut être comprise entre 0,2 s et 30 s, et de préférence entre 0,2 s et 15 s, et de préférence encore entre 0,5 s et 15 s, en fonction du pH de la solution, du moment et de la manière où elle est appliquée.

Cette solution peut être appliquée par immersion, aspersion ou tout autre système. La température de la solution peut par exemple être la température ambiante ou une toute autre température.

Dans le premier mode de réalisation, l'étape d'application de la solution acide intervient après l'étape de rinçage et séchage suivant l'étape de dégraissage. L'application de la solution acide est suivie d'une étape de rinçage et éventuellement séchage des surfaces extérieures 15 avant l'étape d'application de la solution de conversion.

Dans un deuxième mode de réalisation, l'étape d'application de la solution de conversion constitue l'étape d'altération de couches d'oxyde de magnésium ou d'hydroxyde de magnésium présentes sur les surfaces extérieures 15 des revêtements 7.

Dans ce cas, la solution de conversion employée a un pH compris entre 1 et 2.

Les temps d'application sont analogues à ceux du premier mode de réalisation.

Dans un troisième mode de réalisation, l'étape d'altération comprend l'application d'efforts mécaniques et l'application d'une solution acide, sur les surfaces extérieures 15 des revêtements métalliques 7.

De tels efforts mécaniques peuvent être appliqués par une planeuse, des dispositifs de brossage, de grenaillage ...

Ces efforts mécaniques peuvent avoir pour fonction d'altérer du fait de leur seule action des couches d'oxyde de magnésium ou d'hydroxyde de magnésium. Ainsi, les dispositifs de brossage et de grenaillage peuvent enlever tout ou partie de ces couches.

De même, une planeuse, qui se caractérise par l'application d'une déformation plastique par cintrage entre rouleaux, peut être réglée pour déformer la tôle qui la traverse suffisamment pour créer des fissures dans les couches d'oxyde de magnésium ou d'hydroxyde de magnésium.

L'application d'efforts mécaniques est combinée à l'application d'une solution acide, les efforts mécaniques sont appliqués avant la solution acide.

Lorsqu'une solution acide est utilisée en combinaison avec l'application d'efforts mécaniques, le pH de la solution acide peut être plus élevé et notamment supérieur à 3.

Dans ce troisième mode de réalisation, l'étape d'altération intervient avant l'étape de dégraissage.

L'étape d'altération du troisième mode de réalisation comprend l'application d'une solution acide, qui est suivie d'une étape de rinçage et éventuellement séchage des surfaces extérieures 15 des revêtements métalliques 7.

On a soumis des échantillons des tôles 1 obtenues par un procédé selon l'invention, c'est-à-dire avec une étape d'altération des couches d'oxyde de magnésium ou d'hydroxyde de magnésium présents sur les revêtements métalliques, et des tôles obtenues classiquement à des tests de résistance à la corrosion. Il apparaît que les tôles 1 obtenues par un procédé selon l'invention présentent une meilleure résistance à la corrosion.

## Revendications

1. Procédé de réalisation d'une tôle (1), le procédé consistant en la succession des étapes suivantes :
- fourniture d'un substrat (3) en acier présentant deux faces (5) revêtues chacune par un revêtement métallique (7) obtenu par trempe du substrat (3) dans un bain et refroidissement, chaque revêtement métallique (7) comprenant du zinc, entre 0,1 et 20% en poids d'aluminium et entre 0,1 et 10% en poids de magnésium, le substrat (3) ainsi revêtu ayant été soumis à une étape de skin-pass,
- dégraissage des surfaces extérieures (15) des revêtements métalliques (7),
- rinçage et séchage des surfaces extérieures (15) des revêtements métalliques (7),
- altération de couches d'oxyde de magnésium ou d'hydroxyde de magnésium formées sur les surfaces extérieures (15) des revêtements métalliques (7), ladite étape d'altération comprenant l'application d'une solution acide sur les surfaces extérieures (15) des revêtements métalliques (7),
- rinçage et éventuellement séchage des surfaces extérieures (15) des revêtements métalliques (7),
- application d'une solution de conversion sur les surfaces extérieures (15) des revêtements métalliques (7),
- séchage des surfaces extérieures (15) des revêtements métalliques (7),
- mise en peinture des surfaces extérieures (15) des revêtements métalliques (7) pour les recouvrir chacune d'un film de peinture (9,11) comprenant au moins un polymère choisi dans le groupe constitué des polyesters à réticulation mélamine, des polyesters à réticulation isocyanate, des polyuréthanes et des dérivés halogénés de polymères vinyliques, à l'exclusion des peintures cataphorétiques.

2. Procédé selon la revendication 1, l'étape de dégraissage comprenant l'application d'une solution alcaline sur les surfaces extérieures (15) des revêtements métalliques (7).

3. Procédé selon la revendication 1 ou 2, dans lequel la solution acide est appliquée pendant une durée comprise entre 0,2 s et 30 s, notamment entre 0,2 et 15s, de préférence entre 0,5 et 15 s, sur les surfaces extérieures (15) des revêtements métalliques (7).

4. Procédé selon l'une des revendications précédentes, dans lequel la solution acide a un pH compris entre 1 et 4, notamment entre 1 et 3,5, de préférence entre 1 et 3.

5. Procédé de réalisation d'une tôle (1), le procédé consistant en la succession des étapes suivantes :
- fourniture d'un substrat (3) en acier présentant deux faces (5) revêtues chacune par un revêtement métallique (7) obtenu par trempe du substrat (3) dans un bain et refroidissement, chaque revêtement métallique (7) comprenant du zinc, entre 0,1 et 20% en poids d'aluminium et entre 0,1 et 10% en poids de magnésium, le substrat (3) ainsi revêtu ayant été soumis à une étape de skin-pass
- dégraissage des surfaces extérieures (15) des revêtements métalliques (7),
- rinçage et séchage des surfaces extérieures (15) des revêtements métalliques (7),
- application d'une solution acide de conversion ne contenant pas de chrome sur les surfaces extérieures (15) des revêtements métalliques (7), ladite solution de conversion ayant un pH compris entre 1 et 2,
- séchage des surfaces extérieures (15) des revêtements métalliques (7),
- mise en peinture des surfaces extérieures (15) des revêtements métalliques (7) pour les recouvrir chacune d'un film de peinture (9,11) comprenant au moins un polymère choisi dans le groupe constitué des polyesters à réticulation mélamine, des polyesters à réticulation isocyanate, des polyuréthanes et des dérivés halogénés de polymères vinyliques, à l'exclusion des peintures cataphorétiques.

6. Procédé selon la revendication 5, dans lequel la solution acide de conversion est appliquée pendant une durée comprise entre 0,2 s et 30 s, notamment entre 0,2 s et 15 s, de préférence entre 0,5 s et 15 s, sur les surfaces extérieures (15) des revêtements métalliques (7).

7. Procédé de réalisation d'une tôle (1), le procédé consistant en la succession des étapes suivantes :
- fourniture d'un substrat (3) en acier présentant deux faces (5) revêtues chacune par un revêtement métallique (7) obtenu par trempe du substrat (3) dans un bain et refroidissement, chaque revêtement métallique (7) comprenant du zinc, entre 0,1 et 20% en poids d'aluminium et entre 0,1 et 10% en poids de magnésium, le substrat (3) ainsi revêtu ayant été soumis à une étape de skin-pass,
- altération de couches d'oxyde de magnésium ou d'hydroxyde de magnésium formées sur les surfaces extérieures (15) des revêtements métalliques (7), ladite étape d'altération comprenant l'application d'efforts mécaniques sur les surfaces extérieures (15) des revêtements métalliques (7) et l'application d'une solution acide sur les surfaces extérieures (15) des revêtements métalliques (7),
les efforts mécaniques étant appliqués sur les surfaces extérieures (15) des revêtements métalliques (7) avant application de la solution acide,
- rinçage et éventuellement séchage des surfaces extérieures (15) des revêtements métalliques (7),
- dégraissage non-oxydant des surfaces extérieures (15) des revêtements métalliques (7),
- rinçage et séchage des surfaces extérieures (15) des revêtements métalliques (7),
- application d'une solution de conversion sur les surfaces extérieures (15) des revêtements métalliques (7),
- séchage des surfaces extérieures (15) des revêtements métalliques (7),
- mise en peinture des surfaces extérieures (15) des revêtements métalliques (7) pour les recouvrir chacune d'un film de peinture (9,11) comprenant au moins un polymère choisi dans le groupe constitué des polyesters à réticulation mélamine, des polyesters à réticulation isocyanate, des polyuréthanes et des dérivés halogénés de polymères vinyliques, à l'exclusion des peintures cataphorétiques.

8. Procédé selon la revendication 7, dans lequel les efforts mécaniques sont appliqués par passage dans une planeuse.

9. Procédé selon l'une des revendications 7 à 8, dans lequel les efforts mécaniques fissurent les couches d'oxyde de magnésium ou d'hydroxyde de magnésium.

10. Procédé selon l'une des revendications précédentes, dans lequel les revêtements métalliques (7) comprennent entre 0,3 et 10%, notamment entre 0,3 et 4%, en poids de magnésium.

11. Procédé selon l'une des revendications précédentes, dans lequel les revêtements métalliques (7) comprennent entre 0,5 et 11%, notamment entre 0,7 et 6%, en poids d'aluminium.

12. Procédé selon la revendication 11, dans lequel les revêtements métalliques (7) comprennent entre 1 et 6% en poids d'aluminium.

13. Procédé selon l'une des revendications précédentes, dans lequel le rapport massique entre le magnésium et l'aluminium dans les revêtements métalliques (7) est inférieur ou égal à 1, de préférence strictement inférieur à 1 et de préférence strictement inférieur à 0,9.

## Patentansprüche

1. Verfahren zur Herstellung eines Blechs (1), wobei das Verfahren in der Abfolge der folgenden Schritte besteht:
- Bereitstellung eines Substrats (3) aus Stahl mit zwei Flächen (5), welche jeweils mit einer Metallbeschichtung (7), erhalten durch Eintauchen des Substrats (3) in ein Bad und Abkühlen, beschichtet sind, wobei jede metallische Beschichtung (7) Zink, zwischen 0,1 und 20 Gew.-% Aluminium und zwischen 0,1 und 10 Gew.-% Magnesium umfasst, wobei das so beschichtete Substrat (3) einem Schritt vom Typ skin-pass unterworfen wird,
- Entfettung der äußeren Oberflächen (15) der metallischen Beschichtungen (7),
- Spülung und Trocknung der äußeren Oberflächen (15) der metallischen Beschichtungen (7),
- Veränderung der auf den äußeren Oberflächen (15) der metallischen Beschichtungen (7) gebildeten Magnesiumoxid- oder Magnesiumhydroxidschichten, wobei dieser Schritt der Veränderung die Aufbringung einer sauren Lösung auf die äußeren Oberflächen (15) der metallischen Beschichtungen (7) umfasst,
- Spülung und gegebenenfalls Trocknung der äußeren Oberflächen (15) der metallischen Beschichtungen (7),
- Aufbringung einer Konversionslösung auf die äußeren Oberflächen (15) der metallischen Beschichtungen (7),
- Trocknung der äußeren Oberflächen (15) der metallischen Beschichtungen (7),
- Lackieren der äußeren Oberflächen (15) der metallischen Beschichtungen (7), um diese jeweils mit einem Lackfilm (9, 11) umfassend mindestens ein Polymer ausgewählt aus der Gruppe bestehend aus Melamin-vernetzten Polyestern, Isocyanat-vernetzten Polyestern, Polyurethanen und Halogenderivaten von vinylischen Polymeren zu überziehen, unter Ausschluss von kataphoretischen Lackierungen.

2. Verfahren gemäß Anspruch 1, wobei der Schritt der Entfettung die Aufbringung einer alkalischen Lösung auf die äußeren Oberflächen (15) der metallischen Beschichtungen (7) umfasst.

3. Verfahren gemäß Anspruch 1 oder 2, wobei die saure Lösung für eine Dauer zwischen 0,2 s und 30 s, insbesondere zwischen 0,2 und 15 s, vorzugsweise zwischen 0,5 und 15 s, auf die äußeren Oberflächen (15) der metallischen Beschichtungen (7) aufgebracht wird.

4. Verfahren gemäß einem der voranstehenden Ansprüche, wobei die saure Lösung einen pH zwischen 1 und 4, insbesondere zwischen 1 und 3,5, vorzugsweise zwischen 1 und 3 aufweist.

5. Verfahren zur Herstellung eines Blechs (1), wobei das Verfahren in der Abfolge der folgenden Schritte besteht:
- Bereitstellung eines Substrats (3) aus Stahl mit zwei Flächen (5), welche jeweils mit einer metallischen Beschichtung (7), erhalten durch Eintauchen des Substrats (3) in ein Bad und Abkühlen, beschichtet sind, wobei jede metallische Beschichtung (7) Zink, zwischen 0,1 und 20 Gew.-% Aluminium und zwischen 0,1 und 10 Gew.-% Magnesium umfasst, wobei das so beschichtete Substrat (3) einem Schritt vom Typ skin-pass unterworfen wird,
- Entfettung der äußeren Oberflächen (15) der metallischen Beschichtungen (7),
- Spülung und Trocknung der äußeren Oberflächen (15) der metallischen Beschichtungen (7),
- Aufbringung einer sauren, chromfreien Konversionslösung auf die äußeren Oberflächen (15) der metallischen Beschichtungen (7), wobei die Konversionslösung einen pH zwischen 1 und 2 aufweist,
- Trocknung der äußeren Oberflächen (15) der metallischen Beschichtungen (7),
- Lackieren der äußeren Oberflächen (15) der metallischen Beschichtungen (7), um diese jeweils mit einem Lackfilm (9, 11) umfassend mindestens ein Polymer ausgewählt aus der Gruppe bestehend aus Melamin-vernetzten Polyestern, Isocyanat-vernetzten Polyestern, Polyurethanen und Halogenderivaten von vinylischen Polymeren zu überziehen, unter Ausschluss von kataphoretischen Lackierungen.

6. Verfahren gemäß Anspruch 5, wobei die saure Konversionslösung für eine Dauer zwischen 0,2 s und 30 s, insbesondere zwischen 0,2 s und 15 s, vorzugsweise zwischen 0,5 s und 15 s, auf die äußeren Oberflächen (15) der metallischen Beschichtungen (7) aufgebracht wird.

7. Verfahren zur Herstellung eines Blechs (1), wobei das Verfahren in der Abfolge der folgenden Schritte besteht:
- Bereitstellung eines Substrats (3) aus Stahl mit zwei Flächen (5), welche jeweils mit einer metallischen Beschichtung (7), erhalten durch Eintauchen des Substrats (3) in ein Bad und Abkühlen, beschichtet sind, wobei jede metallische Beschichtung (7) Zink, zwischen 0,1 und 20 Gew.-% Aluminium und zwischen 0,1 und 10 Gew.-% Magnesium umfasst, wobei das so beschichtete Substrat (3) einem Schritt vom Typ skin-pass unterworfen wird,
- Veränderung der auf den äußeren Oberflächen (15) der metallischen Beschichtungen (7) gebildeten Magnesiumoxid- oder Magnesiumhydroxidschichten, wobei dieser Schritt der Veränderung das Ausüben mechanischer Kräfte auf die äußeren Oberflächen (15) der metallischen Beschichtungen (7) und die Aufbringung einer sauren Lösung auf die äußeren Oberflächen (15) der metallischen Beschichtungen (7) umfasst,
wobei die mechanischen Kräfte vor Aufbringung der sauren Lösung auf die äußeren Oberflächen (15) der metallischen Beschichtungen (7) ausgeübt werden,
- Spülung und gegebenenfalls Trocknung der äußeren Oberflächen (15) der metallischen Beschichtungen (7),
- nicht-oxidierende Entfettung der äußeren Oberflächen (15) der metallischen Beschichtungen (7),
- Spülung und Trocknung der äußeren Oberflächen (15) der metallischen Beschichtungen (7),
- Aufbringung einer Konversionslösung auf die äußeren Oberflächen (15) der metallischen Beschichtungen (7),
- Trocknung der äußeren Oberflächen (15) der metallischen Beschichtungen (7),
- Lackieren der äußeren Oberflächen (15) der metallischen Beschichtungen (7), um diese jeweils mit einem Lackfilm (9, 11) umfassend mindestens ein Polymer ausgewählt aus der Gruppe bestehend aus Melamin-vernetzten Polyestern, Isocyanat-vernetzten Polyestern, Polyurethanen und Halogenderivaten von vinylischen Polymeren zu überziehen, unter Ausschluss von kataphoretischen Lackierungen.

8. Verfahren gemäß Anspruch 7, wobei die mechanischen Kräfte mittels Durchlaufen eines Walzwerks ausgeübt werden.

9. Verfahren gemäß einem der Ansprüche 7 bis 8, wobei die mechanischen Kräfte zu Rissbildung in den Magnesiumoxid- oder Magnesiumhydroxidschichten führen.

10. Verfahren gemäß einem der voranstehenden Ansprüche, wobei die metallischen Beschichtungen (7) zwischen 0,3 und 10 Gew.-%, insbesondere zwischen 0,3 und 4 Gew.-% Magnesium umfassen.

11. Verfahren gemäß einem der voranstehenden Ansprüche, wobei die metallischen Beschichtungen (7) zwischen 0,5 und 11 Gew.-%, insbesondere zwischen 0,7 und 6 Gew.-% Aluminium umfassen.

12. Verfahren gemäß Anspruch 11, wobei die metallischen Beschichtungen (7) zwischen 1 und 6 Gew.-% Aluminium umfassen.

13. Verfahren gemäß einem der voranstehenden Ansprüche, wobei das Gewichtsverhältnis zwischen Magnesium und Aluminium in den metallischen Beschichtungen (7) geringer oder gleich 1, vorzugsweise strikt geringer als 1 und vorzugsweise strikt geringer als 0,9 ist.

## Claims

1. A method for producing a metal sheet (1), the method consisting of the following series of steps:
- providing a steel substrate (3) having two faces (5) each coated with a metal coating (7) obtained by dipping the substrate (3) in a bath and cooling, each metal coating (7) comprising zinc, between 0.1 and 20 wt% of aluminum, and between 0.1 and 10 wt% of magnesium, the substrate (3) thus coated having been subjected to a skin-pass step,
- degreasing the outer surfaces (15) of the metal coatings (7),
- rinsing and drying the outer surfaces (15) of the metal coatings (7),
- altering layers of magnesium oxide or magnesium hydroxide formed on the outer surfaces (15) of the metal coatings (7), said alteration step comprising the application of an acid solution on the outer surfaces (15) of the metal coatings (7),
- rinsing and optionally drying the outer surfaces (15) of the metal coatings (7),
- applying a conversion solution on the outer surfaces (15) of the metal coatings (7),
- drying the outer surfaces (15) of the metal coatings (7),
- painting the outer surfaces (15) of the metal coatings (7) to cover each of them with a paint film (9, 11) comprising at least one polymer chosen from the group consisting of melamine-cross-linking polyesters, isocyanate-cross-linking polyesters, polyurethanes and halogenated derivatives of vinyl polymers, excluding cataphoretic paints.

2. The method according to claim 1, the degreasing step comprising applying an alkaline solution on the outer surfaces (15) of the metal coatings (7).

3. The method according to claim 1 or 2, wherein the acid solution is applied during a duration comprised between 0.2 s and 30 s, notably between 0.2 s and 15 s, preferably between 0.5 s and 15 s, on the outer surfaces (15) of the metal coatings (7).

4. The method according to one of the preceding claims, wherein the acid solution has a pH comprised between 1 and 4, notably between 1 and 3.5, preferably between 1 and 3.

5. A method for producing a metal sheet (1), the method consisting of the following series of steps:
- providing a steel substrate (3) having two faces (5) each coated with a metal coating (7) obtained by dipping the substrate (3) in a bath and cooling, each metal coating (7) comprising zinc, between 0.1 and 20 wt% of aluminum, and between 0.1 and 10 wt% of magnesium, the substrate (3) thus coated having been subjected to a skin-pass step,
- degreasing the outer surfaces (15) of the metal coatings (7),
- rinsing and drying the outer surfaces (15) of the metal coatings (7),
- applying an acid conversion solution not containing chromium on the outer surfaces (15) of the metal coatings (7), said conversion solution having a pH comprised between 1 and 2,
- drying the outer surfaces (15) of the metal coatings (7),
- painting the outer surfaces (15) of the metal coatings (7) to cover each of them with a paint film (9, 11) comprising at least one polymer chosen from the group consisting of melamine-cross-linking polyesters, isocyanate-cross-linking polyesters, polyurethanes and halogenated derivatives of vinyl polymers, excluding cataphoretic paints.

6. The method according to claim 5, wherein the acid conversion solution is applied during a duration comprised between 0.2 s and 30 s, notably between 0.2 s and 15 s, preferably between 0.5 s and 15 s, on the outer surfaces (15) of the metal coatings (7).

7. A method for producing a metal sheet (1), the method consisting of the following series of steps:
- providing a steel substrate (3) having two faces (5) each coated with a metal coating (7) obtained by dipping the substrate (3) in a bath and cooling, each metal coating (7) comprising zinc, between 0.1 and 20 wt% of aluminum, and between 0.1 and 10 wt% of magnesium, the substrate (3) thus coated having been subjected to a skin-pass step,
- altering layers of magnesium oxide or magnesium hydroxide formed on the outer surfaces (15) of the metal coatings (7), said alteration step comprising applying mechanical forces on the outer surfaces (15) of the metal coatings (7), and applying an acid solution on the outer surfaces (15) of the metal coatings (7),
the mechanical forces being applied on the outer surfaces (15) of the metal coatings (7) before applying the acid solution,
- rinsing and optionally drying the outer surfaces (15) of the metal coatings (7),
- non-oxidizing degreasing the outer surfaces (15) of the metal coatings (7),
- rinsing and drying the outer surfaces (15) of the metal coatings (7),
- applying a conversion solution on the outer surfaces (15) of the metal coatings (7),
- drying the outer surfaces (15) of the metal coatings (7),
- painting the outer surfaces (15) of the metal coatings (7) to cover each of them with a paint film (9, 11) comprising at least one polymer chosen from the group consisting of melamine-cross-linking polyesters, isocyanate-cross-linking polyesters, polyurethanes and halogenated derivatives of vinyl polymers, excluding cataphoretic paints.

8. The method according to claim 7, wherein the mechanical forces are applied by passing through a roller leveler.

9. The method according to one of claims 7 to 8, wherein the mechanical forces crack the layers of magnesium oxide or magnesium hydroxide.

10. The method according to one of the preceding claims, wherein the metal coatings (7) comprise between 0.3 and 10 wt%, notably between 0.3 and 4 wt%, of magnesium.

11. The method according to one of the preceding claims, wherein the metal coatings (7) comprise between 0.5 and 11 wt%, notably between 0.7 and 6 wt%, of magnesium.

12. The method according to claim 11, wherein the metal coatings (7) comprise between 1 and 6 wt% of aluminum.

13. The method according to one of the preceding claims, wherein the weight ratio between the magnesium and the aluminum in the metal coatings (7) is less than or equal to 1, preferably strictly less than 1, and preferably strictly less than 0.9.
